(19) Europäisches Patentamt / European Patent Office / Office européen des brevets

(11) EP 2 350 208 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**19.07.2023 Patentblatt 2023/29**

(45) Hinweis auf die Patenterteilung:
**24.07.2019 Patentblatt 2019/30**

(21) Anmeldenummer: **09783891.6**

(22) Anmeldetag: **09.10.2009**

(51) Internationale Patentklassifikation (IPC):
***C09C 1/44*** (2006.01) ***C09C 1/50*** (2006.01)
***C09C 1/52*** (2006.01) ***C09C 1/54*** (2006.01)
***C08K 3/04*** (2006.01) ***C09D 11/037*** (2014.01)
***C09D 11/324*** (2014.01)

(52) Gemeinsame Patentklassifikation (CPC):
**C09C 1/50; C09C 1/44; C09C 1/52; C09C 1/54; C09D 11/037; C09D 11/324;** C01P 2004/51; C01P 2006/12; C01P 2006/19

(86) Internationale Anmeldenummer:
**PCT/EP2009/063171**

(87) Internationale Veröffentlichungsnummer:
**WO 2010/043562 (22.04.2010 Gazette 2010/16)**

(54) **RUSS, VERFAHREN ZU SEINER HERSTELLUNG UND SEINE VERWENDUNG**

CARBON BLACK, METHOD FOR THE PRODUCTION THEREOF, AND USE THEREOF

NOIR DE CARBONE, PROCÉDÉS DE PRODUCTION DE NOIR DE CARBONE ET SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.10.2008 DE 102008051886**

(43) Veröffentlichungstag der Anmeldung:
**03.08.2011 Patentblatt 2011/31**

(73) Patentinhaber: **Orion Engineered Carbons GmbH**
**60528 Frankfurt am Main (DE)**

(72) Erfinder:
- **STANYSCHÖFSKY, Michael**
  **50354 Hürth (DE)**
- **MEINERZHAGEN, Gernot**
  **51375 Leverkusen (DE)**
- **MESSER, Paul**
  **50321 Brühl (DE)**
- **FRÖHLICH, Joachim**
  **92318 Neumarkt (DE)**

(74) Vertreter: **f & e patent**
**Braunsberger Feld 29**
**51429 Bergisch Gladbach (DE)**

(56) Entgegenhaltungen:
**EP-A1- 0 792 920 EP-A2- 0 799 866**
**WO-A1-92/04415 GB-A- 699 406**

- **HYDROISOTOP GMBH: "Nachwachsende Rohstoffe,Sekundärbrennstoffe", Hydroisotop GmbH , Retrieved from the Internet: URL:http://www.hydroisotop.de/sites/default/files/dokumente/Nachwachsende_Rohstoffe_Radiocarbonmethode.pdf [retrieved on 2015-10-21]**
- **Dr. R. Edler, Dr. Lauri Kaihola: "LSC Application Note 43 Determination of the C14 content in fuels containing bioethanol and other biogenic materials with liquid scintillation counting", , 1 May 2007 (2007-05-01), XP55223081, Retrieved from the Internet: URL:http://www.perkinelmer.com/pdfs/downloads/APP_Determination-of-Carbon-14-in-fuels-containing-Bioethanol-and-other-Biogenic-Materials-with-Liquid-Scintillation-Counting.pdf [retrieved on 2015-10-22]**

EP 2 350 208 B2

**Beschreibung**

Die Erfindung betrifft einen Ruß, ein Verfahren zu seiner Herstellung sowie seine Verwendung.

Aus EP 0792920, EP 0982378, US 5516833 und WO 92/04415 sind Furnace-Ruße bekannt, die eine enge Aggregatgrößenverteilung aufweisen. EP0799866 offenbart einen Russ und ein Verfahren zu dessen Herstellung.

Nachteil der bekannten Ruße ist der niedrige Anteil an C-14, der auf einen geringen oder keinen Anteil an nicht nachwachsenden Rohstoff hinweist.

Aufgabe der vorliegenden Erfindung ist es, einen Ruß zur Verfügung zu stellen, der einen hohen C-14-Gehalt aus nachwachsendem Rohstoff hat, eine enge Aggregatgrößenverteilung und einen hohen Modul aufweist. Gegenstand der Erfindung ist ein Furnaceruß, welcher dadurch gekennzeichnet ist, dass der Ruß einen C-14 Gehalt von größer 0,05 Bq/g, vorzugsweise größer 0,10 Bq/g, besonders bevorzugt größer 0,15 Bq/g, ganz besonders bevorzugt von größer 0,25 Bq/g, hat und das Verhältnis ∆ D50/Dmode der Aggregatgrößenverteilung kleiner 0,7, vorzugsweise kleiner 0,65, besonders bevorzugt kleiner 0,6, ist.

Der C-14 Gehalt wird wie folgt bestimmt:

1. Probenaufschluss

Der Probenaufschluss hat das Ziel, den Analyten Kohlenstoff ($^{14}C$ und $C_{stabil}$) von anderen möglicherweise störenden Stoffen abzutrennen und möglichst viel Kohlenstoff auf ein möglichst kleines Volumen zu konzentrieren, um optimale Messbedingungen zu schaffen. Dazu wird der Ruß mit einem Überschuss an Sauerstoff in einem Quarzglasrohr verbrannt und so in Kohlendioxid überführt.

2. Radiochemische Reinigung

Dieses Kohlendioxid wird in Natronlauge als Karbonat gelöst. Da das Lösungsvolumen zum einen noch zu groß ist und der Szintillationscocktail für low-level LSC keine zu hohen pH-Werte verträgt, wird zur Präparation der Messprobe das Karbonat mittels $BaC0_3$ gefällt.

3. Aktivitätsbestimmung von $^{14}C$ mittels LSC Quantulus 1220

Der Niederschlag wird filtriert und in ein 20 mL Messgefäß (LSC-Vial) überführt. Es hat sich als sinnvoll erwiesen nicht mehr als ca. 1,5 g $BaC0_3$ in das Messgefäß zu überführen, da ansonsten natürlich in der Bariumverbindung vorkommende Radionuklide aus der Uran bzw. Thorium-Zerfallsreihe die Messergebnisse zu sehr verfälschen würden. Als Blindwert dienen die verwendeten Lösungen ohne gefälltes $BaC0_3$. Um keinen zusätzlichen Kohlenstoff einzuschleppen, der die Ergebnisse verfälschen würde, werden für die Lösungen bidestilliertes Wasser verwendet.

Die Messprobe wird mit ca. 14 mL des Szintillationscocktails QSA versetzt. Danach wird das Gemisch aus Probe und Szintillationscocktail kräftig geschüttelt und im LSC Quantulus-1220 gemessen. Die Messung erfolgt mit einer Kühlzeit von ca. 180 Minuten und bei einer Messzeit von 1000 Minuten.

Die Aggregatgrößenverteilung wird nach der Norm ISO 15825, first edition, 2004-11-01, bestimmt, wobei folgende Modifikationen angewendet werden:

1. Ergänzung in Absatz 4.6.3 der Norm ISO 15825: Der Dmode bezieht sich auf die Massenverteilungskurve (mass distribution curve).
2. Ergänzung in Absatz 5.1 der Norm ISO 15825: Es wird das Gerät BI-DCP Particle Sizer und die zugehörige Auswertesoftware dcplw32, Version 3.81, verwendet, alles erhältlich bei der Firma Brookhaven Instruments Corporation, 750 Blue Point Rd., Holtsville, NY, 11742.
3. Ergänzung zu Absatz 5.2 der Norm ISO 15825: Es wird das Ultraschall-Steuergerät GM2200, der Schallwandler UW2200, sowie die Sonotrode DH13G verwendet. Ultraschall Steuergerät, Schallwandler und Sonotrode sind erhältlich bei der Firma Bandelin electronic GmbH & Co. KG, Heinrichstraße 3-4, D-12207 Berlin. Dabei werden am Ultraschall-Steuergerät folgende Werte eingestellt: Power % = 50, Cycle = 8. Dies entspricht einer eingestellten Nennleistung von 100 Watt und einem eingestellten Puls von 80%.
4. Ergänzung zu Absatz 5.2.1 der Norm ISO 15825: Die Ultraschallzeit wird auf 4,5 Minuten festgelegt.
5. Abweichend zu der im Absatz 6.3 der Norm ISO 15825 angegebenen Definition wird "Surfactant" wie folgt definiert: "Surfactant" ist ein anionisches Tensid vom Typ Nonidet P 40 Substitute von der Firma Fluka, erhältlich bei Sigma-Aldrich Chemie GmbH, Industriestrasse 25, CH-9471 Buchs SG, Switzerland.
6. Abweichend zu der im Absatz 6.5 der Norm ISO 15825 angegebenen Definition der Spinflüssigkeit ist die Spinflüssigkeit wie folgt definiert: Zur Herstellung der Spinflüssigkeit werden 0,25 g Tensid Nonidet P 40 Substitute von

Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Spinflüssigkeit darf nach deren Herstellung höchstens 1 Woche verwendet werden.

7. Abweichend zu der im Absatz 6.6 der Norm ISO 15825 angegebenen Definition der Dispersionsflüssigkeit ist die Dispersionsflüssigkeit wie folgt definiert: Zur Herstellung der Dispersionsflüssigkeit werden 200 ml Ethanol (Absatz 6.2), und 0,5 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Dispersionsflüssigkeit darf nach deren Herstellung höchstens 1 Woche verwendet werden.

8. Ergänzung zu Absatz 7 der Norm ISO 15825: Es wird ausschließlich ungeperlter oder geperlter Ruß verwendet.

9. Die Anweisungen in den Absätzen 8.1, 8.2, 8.3 der Norm ISO 15825 werden zusammenfassend durch folgende Anweisung ersetzt: Der Ruß wird in einem Achatmörser leicht zerdrückt. 20 mg Ruß werden dann in einem 30 ml Rollrandfläschchen (Durchmesser 28 mm, Höhe 75 mm, Wanddicke 1,0 mm) mit 20 ml Dispersionslösung (Absatz 6.6) versetzt und in einem Kühlbad (16°C +/- 1°C) für die Dauer von 4,5 Minuten (Absatz 5.2.1) mit Ultraschall (Absatz 5.2) behandelt und damit in der Dispersionslösung suspendiert. Nach der Ultraschall-Behandlung wird die Probe nach spätestens 5 Minuten in der Zentrifuge gemessen.

10. Ergänzung zu Absatz 9 der Norm ISO 15825: Der Wert für die einzutragende Dichte von Ruß beträgt 1,86 g/cm$^3$. Die Temperatur für die einzutragende Temperatur wird gemäß Absatz 10.11 bestimmt. Für den Typ der Spinflüssigkeit wird die Option "Aqueous" ausgewählt. Damit ergibt sich für die Dichte der Spinflüssigkeit ein Wert von 0,997 (g/cc), und für die Viskosität der Spinflüssigkeit ein Wert von 0,917 (cP). Die Lichtstreukorrektur erfolgt mit den in der Software dcplw 32 anwählbaren Optionen: Datei = carbon.prm; Mie-Correction.

11. Ergänzung zu Absatz 10.1 der Norm ISO 15825: Die Zentrifugengeschwindigkeit ist auf 11000 r/min festgelegt.

12. Ergänzung zu Absatz 10.2 der Norm ISO 15825: Anstatt 0,2 cm$^3$ Ethanol (Absatz 6.2) werden 0,85 cm$^3$ Ethanol (Absatz 6.2) injiziert.

13. Ergänzung zu Absatz 10.3 der Norm ISO 15825: Es werden exakt 15 cm$^3$ Spinflüssigkeit (Absatz 6.5) injiziert. Anschließend werden 0,15 cm$^3$ Ethanol (Absatz 6.2) injiziert.

14. Die Anweisung Absatz 10.4 der Norm ISO 15825 entfällt komplett.

15. Ergänzung zu Absatz 10.7 der Norm ISO 15825:

Unmittelbar nach dem Start der Datenaufzeichnung überschichtet man die Spinflüssigkeit in der Zentrifuge mit 0,1 cm$^3$ Dodecan (Absatz 6.4).

16. Ergänzung zu Absatz 10.10 der Norm ISO 15825: Für den Fall, dass die Messkurve die Basislinie nicht binnen einer Stunde wieder erreicht, wird die Messung genau nach 1 Stunde Messdauer abgebrochen. Es erfolgt kein Neustart bei einer geänderten Zentrifugendrehzahl.

17. Ergänzung zu Absatz 10.11 der Norm ISO 15825: Anstelle der in der Anweisung beschriebenen Methode zur Ermittlung der Messtemperatur wird die Messtemperatur T, welche in das Computerprogramm einzutragen ist, wie folgt ermittelt:

$$T = 2/3\ (Te - Ta) + Ta,$$

wobei Ta die Temperatur der Messkammer vor der Messung und Te die Temperatur der Messkammer nach der Messung bezeichnet. Die Temperaturdifferenz sollte 4° C nicht übersteigen.

Die Fraktion der Teilchen > 150 nm der Aggregatgrößenverteilung kann kleiner 10 Gew.-%, vorzugsweise kleiner 5 Gew.-%, besonders bevorzugt kleiner 3 Gew.-%, sein.

Die Fraktion > 150 nm bezeichnet den Gewichtsanteil der Aggregate, die einen Stokesdurchmesser größer als 150 nm aufweisen und wird ebenfalls aus der Aggregatgrößenverteilung gemäß der oben beschriebenen Norm ISO 15825 erhalten.

Der ∆D50 Wert und der Dmode werden ebenfalls aus der Aggregatgößenverteilung gemäß der oben beschriebenen Norm ISO 15825 erhalten.

Das Verhältnis D75%/25% kann kleiner oder gleich 3,50, bevorzugt kleiner oder gleich 2,50, ganz besonders bevorzugt kleiner oder gleich 1,40, sein. Das Verhältnis D75%/25% wird aus der Aggregatgößenverteilung gemäß der oben beschriebenen Norm ISO 15825 erhalten.

Der erfindungsgemäße Ruß ist ein Furnaceruß.

Der erfindungsgemäße Ruß kann eine BET-Oberfläche von 10 bis 400 m$^2$/g, vorzugsweise 40 bis 300 m$^2$/g, besonders bevorzugt 70 bis 200 m$^2$/g, haben. Der Wert der BET Oberfläche wird gemäß der Norm ASTM D 6556-04 bestimmt.

Der erfindungsgemäße Ruß kann eine enge Primärteilchenverteilung aufweisen. Diese wird nach ASTM D 3849 - 02 bestimmt. Im Rahmen dieser Untersuchung wird der Wert DV, der Teichhendurchmesser über das Volumen

gemittelt, und der Wert DN, Teilchendurchmesser arithmetisches Mittel, bestimmt. Das Verhältnis DV/DN der Primärteilchenverteilung kann kleiner 1,14, vorzugsweise kleiner 1,12, besonders bevorzugt kleiner 1,11, sein.

Der erfindungsgemäße Ruß kann einen pH-Wert von 2 bis 11, vorzugsweise 5 bis 10, besonders bevorzugt 6 bis 10, haben. Der pH-Wert wird gemäß der Norm ASTM D 1512-05 bestimmt.

Der erfindungsgemäße Ruß kann einen OAN-Wert von 20 ml/100g bis 200 ml/100g, vorzugsweise 30 ml/100g bis 170 ml/100g, besonders bevorzugt 40 ml/100g bis 140 ml/100g, haben. Die OAN Absorption wird gemäß der Norm ASTM D 2414-00 bestimmt.

Der erfindungsgemäße Ruß kann einen 24M4-OAN-Wert von 20 ml/100g bis 160 ml/100g, vorzugsweise 30 ml/100g bis 140 ml/100g, besonders bevorzugt 50 ml/100g bis 120 ml/100g, haben. Die 24M4-OAN Absorption wird gemäß der Norm ASTM D 3493-00 bestimmt.

Der erfindungsgemäße Ruß kann einen Tint-Wert von 10 % bis 250 %, vorzugsweise 50 % bis 200 %, besonders bevorzugt 80 % bis 150 %, haben. Der Tint-Wert wird gemäß der Norm ASTM D 3265-05 bestimmt.

Der erfindungsgemäße Ruß kann eine Iodzahl von 10 mg/g bis 400 mg/g, vorzugsweise 40 mg/g bis 300 mg/g, besonders bevorzugt 70 mg/g bis 200 mg/g, haben. Die Iodzahl wird gemäß der Norm ASTM D 1510-06 bestimmt.

Der erfindungsgemäße Ruß kann einen CTAB-Wert von 10 $m^2/g$ bis 250 $m^2/g$, vorzugsweise 15 $m^2/g$ bis 200 $m^2/g$, besonders bevorzugt 20 $m^2/g$ bis 180 $m^2/g$, haben. Der CTAB-Wert wird gemäß der Norm ASTM D 3765-04 bestimmt.

Der erfindungsgemäße Ruß kann einen STSA-Wert von 10 $m^2/g$ bis 250 $m^2/g$, vorzugsweise 15 $m^2/g$ bis 200 $m^2/g$, besonders bevorzugt 20 $m^2/g$ bis 180 $m^2/g$, haben. Der STSA-Wert wird gemäß der Norm ASTM D 6556-04 bestimmt.

Der erfindungsgemäße Ruß kann einen Anteil an Flüchtigen-Bestandteilen von 0,2 bis 2,5, vorzugsweise 1,0 bis 2,0, besonders bevorzugt 1,2 bis 1,5, haben. Der Anteil an Flüchtigen Bestandteilen wird gemäß der Norm DIN 53552 bestimmt.

Der erfindungsgemäße Ruß kann einen Anteil an Toluollöslichen-Bestandteilen von 0,01 % bis 0,15 %, vorzugsweise 0,02 % bis 0,1 %, besonders bevorzugt 0,04 % bis 0,07 %, haben. Der Anteil an Toluollöslichen Bestandteilen wird gemäß der Norm ASTM D 4527-04 bestimmt.

Der erfindungsgemäße Ruß kann einen Transmissions-Wert bei 425 nm von 60 % bis 100 %, vorzugsweise 70 % bis 100 %, besonders bevorzugt 80 % bis 100 %, haben. Der Transmissions-Wert wird gemäß der Norm ASTM D 1618-04 bestimmt.

Der erfindungsgemäße Ruß kann einen Transmissions-Wert bei 355 nm von 5 % bis 100 %, vorzugsweise 10 % bis 100 %, besonders bevorzugt 20 % bis 100 %, haben. Der Transmissions-Wert wird gemäß der Norm ASTM D 1618-04 bestimmt.

Der erfindungsgemäße Ruß kann einen Transmissions-Wert bei 300 nm von 1 % bis 100 %, vorzugsweise 10 % bis 100 %, besonders bevorzugt 20 % bis 100 %, haben. Der Transmissions-Wert wird gemäß der Norm ASTM D 1618-04 bestimmt.

Der erfindungsgemäße Ruß kann einen Schwefelgehalt von 0 % bis 2,5 %, vorzugsweise 0,05 % bis 2,0 %, besonders bevorzugt 0,1 % bis 1,5 %, haben. Der Schwefelgehalt wird gemäß der Norm ASTM D 1619-03 bestimmt.

Ein weiterer Gegenstand der Erfindung ist ein Verfahren zur Herstellung des erfindungsgemäßen Rußes durch thermischoxidative Pyrolyse oder thermische Spaltung des Rußrohstoffes, welches dadurch gekennzeichnet ist, dass der Rußrohstoff einen nachwachsenden Rußrohstoff enthält und bei der Pyrolyse-/Spaltungsreaktion des Rußrohstoffes ein Sauerstoffunterschuß vorhanden ist.

Ein Sauerstoffunterschuß bedeutet, dass bei der thermischoxidativen Pyrolyse oder thermischen Spaltung weniger oder kein Sauerstoff vorhanden ist, als zur stöchiometrischen Umsetzung von Rußrohstoff zu $CO_2$ benötigt wird.

Der erfindungsgemäße Ruß kann mit einem Rußrohstoff der ein C/H-Verhältnis von 0,1 bis 2,0, vorzugsweise 0,3 bis 1,7, besonders bevorzugt 0,4 bis 1,4, insbesondere bevorzugt 0,4 bis 1,15, hat hergestellt werden. Das C/H Verhältnis wird gemäß der Norm ASTM D 5373-02 und der Norm ASTM 5291-02 mit dem Elementaranalysator EuroEA 3000 / HTO von Hekatech bestimmt.

Die Reaktion kann durch Abkühlen auf Temperaturen unterhalb der Pyrolyse- oder Spaltungstemperatur abgebrochen werden.

Der nachwachsende Rußrohstoff kann Biogas, Rapsöl, Sojaöl, Palmöl, Sonnenblumenöl, Öle aus Nüssen oder Olivenöl sein.

Das erfindungsgemäße Verfahren wird in einem Furnacerußreaktor durchgeführt.

Das erfindungsgemäße Verfahren wird in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, durchgeführt.

Der Rußrohstoff kann >0,001 Gew.-%, vorzugsweise ≥ 0,1 Gew.-%, besonders bevorzugt ≥ 25 Gew.-%, insbesondere bevorzugt ≥ 99 Gew.-%, nachwachsenden Rußrohstoff enthalten. Der Rußrohstoff kann aus nachwachsendem Rußrohstoff bestehen.

Die Rußrohstoffe können mittels Radiallanzen und/oder Axiallanze eingedüst werden. Der nachwachsende Rußrohstoff kann fest, flüssig oder gasförmig sein. Der feste nachwachsende Rußrohstoff kann in dem Rußrohstoff dispergiert sein. Der flüssige Rußrohstoff kann durch Druck, Dampf oder Preßluft zerstäubt werden.

Der Rußrohstoff kann eine Mischung aus nachwachsendem Rußrohstoff und flüssigen aliphatischen oder aromatischen, gesättigten oder ungesättigten Kohlenwasserstoffen oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, sein.

Der Rußrohstoff kann eine Mischung aus nachwachsendem Rußrohstoff und gasförmigen Rußrohstoffen, beispielsweise gasförmige aliphatische, gesättigte oder ungesättigte Kohlenwasserstoffe, Mischungen hiervon oder Erdgas, sein.

Das erfindungsgemäße Verfahren ist nicht auf eine bestimmte Reaktorgeometrie beschränkt. Es kann vielmehr auf verschiedene Reaktortypen und Reaktorgrößen angepaßt werden.

Als Rußrohstoff-Zerstäuber können sowohl reine Druckzerstäuber (Einstoffzerstäuber) als auch Zweistoffzerstäuber mit innerer oder äußerer Mischung eingesetzt werden.

Die erfindungsgemäßen Ruße können als Füllstoff, Verstärkerfüllstoff, UV-Stabilisator, Leitfähigkeitsruß oder Pigment verwendet werden. Die erfindungsgemäßen Ruße können in Kautschuk und Kautschukmischungen, Kunststoff, Druckfarben, Tinten, Inkjet-Tinten, Tonern, Lacken, Farben, Papier, Klebstoffen, Batterien, Pasten, Bitumen, Beton und anderen Baustoffen eingesetzt werden. Die erfindungsgemäßen Ruße können als Reduktionsmittel in der Metallurgie angewendet werden.

Ein weiterer Gegenstand der Erfindung sind Polymermischungen, welche dadurch gekennzeichnet sind, daß sie mindestens ein Polymer und mindestens einen erfindungsgemäßen Ruß enthalten.

Polymere können Kunststoffe oder Kautschuke sein.

Polymere können sein Stärke und Stärkeblends mit Polyester, Polyesteramiden, Polyurethanen, Polyvinylalkohol, Celluloseprodukte, beispielsweise Celluloseacetat (CA), Vulkanfiber, Cellulosenitrat, Cellulosepropionat und Celluloseacetobutyrat, Polymilchsäure (PLA), Polyhydroxyalkanoate, beispielsweise Polyhydroxybuttersäure (PHB), Lignin, Chitin, Casein, Gelatine, Polytrimethylenterephthalat (PTT), Polyamide, Polybutylensuccinate, Polybutyleneterephthalate, Polycaprolactone, Polyhydroxyalkanoate, Polyhydroxybutyrate, Polyhydroxybutyrat-co-hydroxyalonate, Polyhydroxybutyrat-co-hydroxyhexanoate, Polyactide, Acrylnitril-Butadien Polymer, Acrylnitril-Butadien-Acrylat Kunststoff (ABA), Acrylnitril-Butadien-Styrol Polymer, Acrylnitril-chlorierter Polyethylen-Styrol, Acrylnitril-(Ethylen-Propylen-Dien)-Styrol (AEPDMS) Polymer, Acrylnitril-Methylmethacrylat Polymer, Acrylnitril-Styrol-Acrylat Polymer, Celluloseacetopropionat, Cellulose-Formaldehyd Polymer, Cresol-Formaldehyd Polymer, Karbonfaser-Kunststoff bzw. kohlenstofffaserverstärkte Kunststoffe, Carboxymethylcellulose, Cycloolefin Copolymer, Chloropren-Kautschuk, Casein-Formaldehyd Polymer, Cellulosetriacetat, Diallylphthalat Polymer, EthylenAcrylsäure Polymer, Ethylen-Butylacrylat Kunststoff (EBA), Ethylcellulose, Ethylen-Ethylacrylat Polymer, Ethylen-Methacrylsäure Polymer, Epoxid Polymer, Epoxidharzester, Ethylen-Propylen Polymer, Ethylen-Tetrafluorethylen Polymer, Ethylen-Vinylacetat (EVA) Polymer, EthylenVinylalkohol Polymer, Perfluor-Ethylen-Propylen Polymer, Furan-Formaldehyd Polymer, Sammelbezeichnung für faserverstärkte Kunststoffe, glasfaserverstärktes Epoxidharz, Sammelbezeichnung für glasfaserverstärkte Kunststoffe, Polyethylen hoher Dichte (PE-HD), Hartgewebe, Flüssigkristall-Polymer (Liquid-Crystal-Polymer), MethylMethacrylat-Butadien-Styrol Polymer, Methyl-Methacrylat-Acrylnitril-Butadien-Styrol, Methylcellulose, Polyethylen mittlerer Dichte (PE-MD), Melamin-Formaldehyd Polymer, Melamin-Phenol-Formaldehyd Polymer, $\alpha$-Methylstyrol-Acrylnitril Kunststoff, Nitrilkautschuk, Nitrocellulose, Non Crimp Fabrics Polymer, Naturkautschuk, Polyamid, Polyacrylsäure, Polyaryletherketon, Polyamidimid, Polyacrylat, Polyacrylnitril, Polyarylat, Polyarylamid, Polybuten, Polybutylacrylat, 1,2-Polybutadien , Polybutennaphthalat, Polybutylenterephthalat, Polycarbonat, Polycyclohexendimethylencyclohexandicarboxylat, Polycarbodiimid, Polycaprolacton, Polycyclohexendimethylenterephthalat, Polychlortrifluorethylen, Polydiallylphthalat, Polydicyclopentadien, Polyethylen, chloriertes Polyethylen (CPE), Polyethylen, niedriger Dichte (LDPE), Polyethylen linear, niedriger Dichte (LLDPE), Polyethylen ultrahohe Molmasse (UHMWPE), Polyethylen sehr niedriger Dichte (VLDPE), Polyestercarbonat, Polyetheretherketon, Polyetherester, Polyetherimid, Polyetherketon , Polyethylennaphthalat, Polyethylenoxid, Ethylen-Propylen-Polymer, Polyethersulfon, Polyesterurethan , Polyethylenterephthalat, Polyetherurethan, Phenol-Formaldehyd , Perfluoralkoxylalkan, Polyimid, Polyisobutylen, Polyisocyanurat, Polyketon, Polymethacrylimid, Polymethylmethacrylat, Poly-N-Methylmethacrylimid, Poly-4-Methylpenten-(1), Poly-$\alpha$-Methylstyrol, Polyoxymethylen; Polyformaldehyd, Polypropylen, chloriertes Polypropylen, Polypropylen expandierbar (EPP), Polypropylen hoch schlagzäh (HIPP), Polyphenylenether, Polypropylenoxid, Polyphenylensulfid, Polyphenylensulfon, Polystyrol, Polystyrol expandierbar (EPS), Polystyrol hoch schlagzäh (HIPS), Polysulfon, Polytetrafluorethylen, Polytrimethylenterephthalat, Polyurethan (PU), Polyvinylacetat, Polyvinylalkohol (PVOH), Polyvinylbutyrat, Polyvinylchlorid, Vinylchlorid-Vinylacetat Polymer, Polyvinylchlorid chloriert (CPVC), Polyvinylchlorid hoch schlagzäh, Polyvinylchlorid weichmacherfrei (UPVC),

Polyvinylidenchlorid, Polyvinylidenfluorid, Polyvinylfluorid, Polyvinylformal , Polyvinylcarbazol, Polyvinylpyrrolidon, Styrol-Acrylnitril Polymer, Styrol-Butadien Polymer, Styrol-Butadien-Kautschuk, Silikon Polymer, Styrol-Maleinsäureanhydrid (SMA) Polymer, Styrol-$\alpha$-Methylstyrol Polymer, gesättigter Polyester, Urea-Formaldehyd Polymer, Polyethylen mit ultra hoher molekularer Masse, ungesättigtes Polyester, Vinylchlorid Polymer, Vinylchlorid-Ethylen Polymer, Vinylchlorid-Ethylen-Methylacrylat (VCEMA) Polymer, Vinylchlorid-Ethylen-Vinylacetat Polymer, Vinylchlorid-Methylacrylat (VCMA) Polymer, Vinylchlorid-Methylmethacrylat Polymer, Vinylchlorid-Octylacrylat (VCOA) Polymer, Vinylchlorid-Vinylacetat Polymer, Vinylchlorid-Vinylidenchlorid Polymer, Vinylester Harz und vernetztes Polyethylen.

Ein weiterer Gegenstand der Erfindung sind Kautschukmischungen, welche dadurch gekennzeichnet sind, daß sie mindestens einen Kautschuk und mindestens einen erfindungsgemäßen Ruß enthalten.

Der erfindungsgemäße Ruß kann in Mengen von 10 bis 150 Gew-%, bevorzugt 40 bis 100 Gew.-%, besonders bevorzugt 60 bis 80 Gew.-%, bezogen auf die Menge des eingesetzten Kautschuks, eingesetzt werden.

Die erfindungsgemäße Kautschukmischung kann Kieselsäure, vorzugsweise gefällte und pyrogene Kieselsäuren, sowie natürlich vorkommende, mineralische, silikatische, kalkartige oder kalkhaltige Füllstoffe enthalten. Die erfindungsgemäße Kautschukmischung kann Organosilane, beispielsweise Bis(trialkoxysilylalkyl)-oligo- oder -polysulfid, beispielsweise Bis(triethoxysilylpropyl)disulfid oder Bis(triethoxysilylpropyl)tetrasulfid, oder Mercaptosilane enthalten.

Mercaptosilane können Verbindungen der allgemeinen Formel I sein

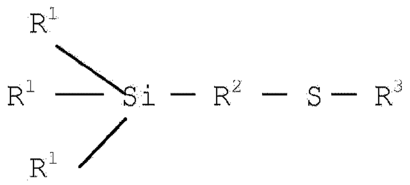

I,

wobei $R^1$ gleich oder verschieden und eine Alkylpolyethergruppe $-O-(R^4-O)_m-R^5$, C1-C12-Alkyl- oder $R^6O$-Gruppe ist, mit $R^4$ gleich oder verschieden, eine verzweigte oder unverzweigte, gesättigte oder ungesättigte, aliphatische zweibindige C1-C30 Kohlenwasserstoffgruppe, vorzugsweise $CH_2-CH_2$, $CH_2-CH(CH_3)$, $-CH(CH_3)-CH_2-$, $CH_2-CH_2-CH_2$ oder Gemische hiervon, ist, m im Mittel 1 bis 30, bevorzugt 2 bis 20, besonders bevorzugt 2 bis 15, ganz besonders bevorzugt 3 bis 10, ist, $R^5$ aus mindestens 1, vorzugsweise mindestens 12, C-Atomen besteht und eine unsubstituierte oder substituierte, verzweigte oder unverzweigte einbindige Alkyl-, Alkenyl, Aryl oder Aralkylgruppe ist, und $R^6$ gleich H, Methyl, Ethyl, Propyl, C9-C30 verzweigten oder unverzweigten einbindigen Alkyl-, Alkenyl-, Aryl-, Aralkylgruppe oder $(R^7)_3Si$-Gruppe, mit $R^7$ gleich C1-C30 verzweigte oder unverzweigte Alkyl- oder Alkenyl-Gruppe, ist, $R^2$ eine verzweigte oder unverzweigte, gesättigte oder ungesättigte, aliphatische, aromatische oder gemischt aliphatische /aromatische zweibindige C1-C30 Kohlenwasserstoffgruppe und $R^3$ gleich H, CN oder $(C{=}O)-R^8$ ist, mit $R^8$ gleich einer verzweigten oder unverzweigten, gesättigten oder ungesättigten, aliphatischen, aromatischen oder gemischt aliphatischen /aromatischen einbindigen C1-C30, bevorzugt C5 bis C30, besonders bevorzugt C5 bis C20, ganz besonders bevorzugt C7 bis C15, außerordentlich bevorzugt C7 bis C11, Kohlenwasserstoffgruppe.

Die erfindungsgemäße Kautschukmischung kann mindestens einen erfindungsgemäßen Ruß, gefällte oder pyrogene Kieselsäure, natürlich vorkommende mineralische, silikatische, kalkartige oder kalkhaltige Füllstoffe und ein Organosilan enthalten.

Die erfindungsgemäße Kautschukmischung kann Kautschukhilfsmittel enthalten.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,
- Chloropren (CR),
- Isobutylen/Isopren-Copolymerisate (IIR),

- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),
- teilhydrierter oder vollständig hydrierter NBR-Kautschuk (HNBR),
- Ethylen/Propylen/Dien-Copolymerisate (EPDM) oder
- oben genannte Kautschuke, die zusätzlich funktionelle Gruppen besitzen, wie z.B. Carboxy- , Silanol- oder Epoxygruppen, beispielsweise Epoxidierter NR, Carboxyfunktionalisierter NBR oder Silanol- (-SiOH) bzw. Siloxy-funktionalisierter (-Si-OR) SBR,

sowie Mischungen dieser Kautschuke.

Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden.

Die erfindungsgemäßen Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol oder Hexantriol, die der Kautschukindustrie bekannt sind.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-% bezogen auf Kautschuk.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise werden solche Kautschukmischungen im Innenmischer hergestellt, wobei zunächst in einer oder mehreren aufeinanderfolgenden thermomechanischen Mischstufen die Kautschuke, der erfindungsgemäße Ruß, gegebenenfalls die Kieselsäure und das Organosilan und die

Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-120°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsolen, Dichtungsringen, Profilen und Dämpfungselementen.

Ein weiterer Gegenstand der Erfindung sind Kunststoffmischungen, welche dadurch gekennzeichnet sind, daß sie mindestens einen Kunststoff und mindestens einen erfindungsgemäßen Ruß enthalten.

Kunststoffe können beispielsweise PE, PP, PVA oder TPE's sein. Die erfindungsgemäßen Kunststoffmischungen können zur Herstellung von Kabeln, Rohren, Fasern, Folien, insbesondere Agrarfolien, technischen Kunststoffen und Spritzgußartikeln verwendet werden.

Ein weiterer Gegenstand der Erfindung sind Tinten, welche dadurch gekennzeichnet sind, daß sie mindestens einen erfindungsgemäßen Ruß enthalten.

Ein weiterer Gegenstand der Erfindung sind Druckfarben, welche dadurch gekennzeichnet sind, daß sie mindestens einen erfindungsgemäßen Ruß enthalten.

Der erfindungsgemäße Ruß hat den Vorteil eines hohen C-14 Anteils und somit einen hohen Anteil an Kohlenstoff aus nachwachsendem Rohstoff. Dadurch wird die fossile $CO_2$ Emission reduziert. Ein weiterer Vorteil ist die enge Aggregatgrößenverteilung und den damit verbundenen hohen Modul.

**Beispiele**

Beispiel 1 (Rußherstellung):

Eine Reihe von erfindungsgemäßen Rußen wird in dem in Figur 1 dargestellten Rußreaktor hergestellt.

Figur 1 zeigt einen Längsschnitt durch den Furnacereaktor. Der Rußreaktor besitzt eine Brennkammer, in der das heiße Prozeßgas für die Pyrolyse des Rußöles durch Verbrennen von Erdgas unter Zufuhr von einem Überschuß an Luftsauerstoff erzeugt wird.

Die Zufuhr der Verbrennungsluft und des Brennstoffes erfolgt über die Öffnungen 1 in der Stirnwand der Brennkammer. Die Brennkammer läuft konisch auf die Engstelle zu. Der Rußrohstoff wird über Radiallanzen 3 und/oder axial über Lanze 2 in der Engstelle eingedüst. Nach Durchqueren der Engstelle expandiert das Reaktionsgasgemisch in die Reaktionskammer.

In der Abbruchzone wird durch die Quenchwasser-Lanze 4 Wasser eingesprüht.

Die Abmessungen des verwendeten Reaktors sind der folgenden Aufstellung zu entnehmen:

| | |
|---|---|
| Größter Durchmesser der Brennkammer: | 220 mm |
| Länge der Brennkammer bis Engstelle: | 556 mm |
| Länge des konischen Teils der Brennkammer: | 256 mm |
| Durchmesser der Engstelle: | 44 mm |
| Länge der Engstelle: | 100 mm |
| Durchmesser der Reaktionskammer: | 200 mm |
| Maximale Position der Quenchwasserlanze(n) 1) | 6160 mm |

1) gemessen vom Eintritt in die Engstelle (+: nach Eintritt -: vor Eintritt)

Zur Herstellung der Ruße werden als Brennstoff Erdgas und ein Rußöl mit einem Kohlenstoffgehalt von 91,3 Gew.-% und einem Wasserstoffgehalt von 7,87 Gew.-% eingesetzt.

Die Reaktorparameter für die Herstellung der erfindungsgemäßen Ruße sind in Tabelle 1 aufgeführt. Es werden 5 verschiedene Ruße hergestellt (Ruße R1 bis R5). Die Herstellbedingungen unterschieden sich insbesondere bezüglich der Menge des in der Engstelle injizierten Rußrohstoff.

Tabelle 1:

| Reaktorparameter | Einheit | R1 Vergleichsruß | R2 | R3 | R4 | R5 |
|---|---|---|---|---|---|---|
| Verbrennungsluft | $Nm^3/h$ | 200 | 200 | 200 | 200 | 200 |
| Temperatur der Verbrennungs luft | °C | 516 | 520 | 520 | 520 | 520 |
| Brennstoff (Erdgas) | $Nm^3/h$ | 14 | 14 | 14 | 14 | 14 |
| Rußrohstoff | Kg/h | 36 | 24 | 26 | 30 | 34 |
| Rapsölanteil am Rußrohstoff | Gew.-% | 0 | 100 | 75 | 50 | 14 |
| Rußrohstoff-Temperatur | °C | 120 | 120 | 120 | 120 | 120 |
| Zerstäubermedium | $m^3$ $N_2$ | 4 | 4 | 4 | 4 | 4 |
| Additiv ($K_2CO_3$) | g/h | - | - | - | - | - |
| Quenchposition1) | mm | 4290 | 4290 | 4290 | 4290 | 4290 |
| 1)Gemessen vom Eintritt in die Engstelle | | | | | | |

Die rußanalytischen Kenndaten der hergestellten Ruße werden nach folgenden Normen ermittelt und sind in Tabelle 2 aufgeführt:

| | |
|---|---|
| CTAB-Oberfläche: | ASTM D-3765 |
| Jodzahl: | ASTM D 1510 |
| STSA: | ASTM D 6556 |
| BET: | ASTM D 6556 |
| OAN Absorption: | ASTM D 2414-00 |
| 24M4-OAN Absorption: | ASTM D-3493-00 |
| pH-Wert: | ASTM D 1512 |

| | |
|---|---|
| Transmission: | ASTM D 1618-04 |
| Schwefel-Anteil: | ASTM D 1619-03 |
| Toluollösliche-Anteile: | ASTM D 4527-04 |
| Flüchtige-Bestandteile: | DIN 53552 |
| Tint: | ASTM D 3265-05 |

Der ∆D50-Wert ist die Breite der Aggregatgrößenverteilungskurve bei der halben Peakhöhe. Der Dw-Wert ist der Gewichtsmittelwert der Aggregatgrößenverteilung. Der Dmode-Wert ist die Aggregatgröße mit der größten Häufigkeit (Peakmaximum der Aggregatgrößenverteilungskurve). Das D75%/25%-Verhältnis berechnet sich aus dem Quotienten des Teilchendurchmessers bei dem 75% der Teilchen kleiner und 25 % der Teilchen größer sind und dem Teilchendurchmesser bei dem 25% der Teilchen kleiner und 75% größer sind, bezogen auf die Summen-Gewichtsaggregatgrößenverteilung.

Tabelle 2:

| Probe Anteil Rapsöl | % | N375 - Ref. | N220 - Ref. | R1 0 Ref. | R2 100 | R3 75 | R4 50 | R5 14 |
|---|---|---|---|---|---|---|---|---|
| **Analytik** | | | | | | | | |
| CTAB | $m^2/g$ | 94 | 110 | 105 | 100 | 121 | 108 | 108 |
| Iodzahl | mg/g | 91 | 120 | 109 | 77 | 117 | 112 | 111 |
| BET | $m^2/g$ | 92 | 113 | 109 | 95 | 127 | 113 | 109 |
| STSA | $m^2/g$ | 91 | 109 | 105 | 94 | 118 | 107 | 105 |
| OAN | ml/ 100g | 112 | 114 | 135 | 108 | 122 | 132 | 102 |
| 24M4 OAN | ml/ 100g | 97 | 101 | 90 | 79 | 86 | 89 | 81 |
| Tint | % | 116 | 117 | 128 | 124 | 136 | 129 | 127 |
| Transmission 425 nm | % | 74 | 100 | 100 | 73 | 100 | 100 | 100 |
| Transmission 355 nm | % | 5 | 99 | 91 | 8 | 95 | 93 | 95 |
| Transmission 300 nm | % | 0,6 | 98 | 53 | 2 | 71 | 61 | 57 |
| pH-Wert | - | 7,4 | 7,1 | 7,5 | 8,0 | 6,7 | 7,0 | 7,1 |
| Schwefelgehalt | % | 0,16 | 0,10 | 0,37 | 0,05 | 0,21 | 0,27 | 0,36 |
| Toluollösl. Anteile | % | 0,09 | 0,02 | 0,01 | 0,10 | 0,04 | 0,04 | 0,04 |
| Flüchtige Anteile 950 °C | % | 2,09 | 1,77 | 1,54 | 1,38 | 1,77 | 1,70 | 1,52 |
| Dw | nm | 85 | 77 | 79 | 71 | 67 | 76 | 72 |
| Dmode | nm | 80 | 74 | 74 | 68 | 62 | 72 | 66 |
| ∆ D 50 | nm | 60 | 54 | 53 | 37 | 42 | 45 | 47 |
| Verhältnis D75 % / 25 % | - | 1,52 | 1,49 | 1,49 | 1,36 | 1,43 | 1,42 | 1,48 |
| Fraktion >150 nm | % | 2 | 0 | 1 | 0 | 0 | 1 | 1 |
| ∆ D 50 / Dmode C/H-Verhältnis des | - | 0,75 | 0,73 | 0,72 | 0,54 | 0,68 | 0,63 | 0,71 |
| Rußrohstoffes | - | | | 1,2 | 0,6 | 0,7 | 0,8 | 1,1 |
| C-14-Gehalt | % | < EKG | < EKG | (< EKG) < 0,04 | 0,26 | 0,16 | 0,10 | 0,06 |
| (EKG = Erkennungsgrenze 0,04 %) | | | | | | | | |

Beispiel 2 (Gummitechnische Untersuchungen):

Die für die Kautschukmischungen verwendete Rezeptur ist in der folgenden Tabelle 3 angegeben. Dabei bedeutet die Einheit phr Gewichtsanteile, bezogen auf 100 Teile des eingesetzten Rohkautschuks.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 3:

| Substanz | Rezeptur [phr] |
|---|---|
| **1. Stufe** | |
| Krynol 1712 | 137,5 |
| Ruß | 75 |
| ZnO | 3 |
| Stearinsäure | 1,5 |
| Rhenogran DPG-80 | 0,25 |
| Rhenogran TBBS-80 | 1,5 |
| Rhenogran S-80 | 2,25 |

Bei dem Polymer Krynol 1712 handelt es sich um ein ölverstrecktes E-SBR der Bayer AG mit einem Styrolgehalt von 23,5 %. Das Polymer enthält 37,5 phr Öl und weist eine Mooney-Viskosität (ML 1+4/100°C) von 51 auf.

Bei Rhenogran DPG-80 handelt es sich um elastomergebundenes DPG der Bayer AG, bei Rhenogran TBBS-80 handelt es sich um elastomergebundenes TBBS der Bayer AG und bei Rhenogran S-80 handelt es sich um elastomergebundener Schwefel der Bayer AG.

Die Kautschukmischungen werden in einem Innenmischer entsprechend der Mischvorschrift in Tabelle 4 hergestellt.

Tabelle 4

| Stufe 1 | |
|---|---|
| Einstellungen | |
| Mischaggregat<br>Drehzahl<br>Stempeldruck<br>Leervolumen<br>Füllgrad<br>Durchflußtemp. | Rheomix 3010 P<br>40 $min^{-1}$<br>5 bar<br>0,38 L<br>0,66<br>70 °C |
| Mischvorgang | |
| 0 bis 1 min<br>1 bis 6 min<br>6 bis 8,5 min 8,5 min | Krynol 1712<br>ZnO, Stearinsäure,Rhenogran DPG-80, Ruß<br>Rhenogran TBBS-80, Rhenogran S-80 ausfahren |
| 8,5 bis 10,5 min | auf Labormischwalzwerk Fell bilden |
| | (Durchflußtemperatur 50°C, |
| | Friktion 1:1,4, 24:34 $min^{-1}$) |
| | 5* bei Walzenspalt 0,8 mm stürzen |
| | Fell ausziehen. |

In Tabelle 5 sind die Methoden für die Gummitestung zusammengestellt.

Tabelle 5

| Physikalische Testung | Norm/Bedingungen |
|---|---|
| Vulkameterprüfung | DIN 53529/3, ISO 6502 |
| Shore A Härte | DIN 53505, ISO 7619-1 |
| Ball Rebound, 60°C (%) | ASTM D 2632-01 |
| Viskoelastische Eigenschaften | DIN 53513, ISO 4664-1 |

(fortgesetzt)

| Physikalische Testung | Norm/Bedingungen | |
|---|---|---|
| Zugversuch am Ring | DIN 53504, ISO 37 | |
| Physikalische Testung | | Norm/Bedingungen |
| Goodrich-Flexometertest, 0,175 inch Hub, 120 min, 23 °C | Kontakttemperatur (°C)<br>Einstichtemperatur (°C)<br>Bleibende Verformung (%) | DIN 53533, ASTM D 623 A |

Die Tabelle 6 zeigt die Ergebnisse der gummitechnischen Prüfung. Die Mischungen werden auf t95% der Rheometerprüfung aber nicht länger als 30 min bei 170°C vulkanisiert.

Tabelle 6

| Probe Anteil Rapsöl | % | N 375 - Ref. | N 220 - Ref. | R1 0 Ref. | R2 100 | R3 75 | R4 50 | R5 14 |
|---|---|---|---|---|---|---|---|---|
| **Rohmischung** | | | | | | | | |
| Dmin | dNm | 3,36 | 3,85 | 4,01 | 3,52 | 4,50 | 3,99 | 3,64 |
| Dmax - Dmin | dNm | 13,65 | 13,79 | 14,32 | 13,78 | 14,81 | 14,30 | 14,04 |
| t 10 % 170 °C | min | 1,45 | 1,60 | 1,49 | 1,27 | 1,44 | 1,45 | 1,49 |
| t 95 % 170 °C | min | 6,17 | 6,63 | 6,22 | 5,90 | 6,35 | 6,48 | 6,60 |
| **Vulkanisat** | | | | | | | | |
| Zugfestigkeit | MPa | 20,9 | 20,1 | 20,5 | 20,6 | 21,0 | 19,0 | 19,7 |
| 100 % Modul | MPa | 1,9 | 1,9 | 2,1 | 1,9 | 1,9 | 1,9 | 1,7 |
| 300 % Modul | MPa | 10,5 | 9,7 | 10,3 | 10,0 | 9,5 | 9,9 | 8,5 |
| Bruchdehnung | % | 515 | 525 | 525 | 525 | 550 | 495 | 555 |
| Shore A Härte Goodrich Flexometer | - | 66 | 68 | 68 | 66 | 69 | 68 | 66 |
| 0,175 inch / 2 h | | | | | | | | |
| - Kontakttemperatur | °C | 79 | 89 | 91 | 82 | 97 | 95 | 87 |
| - Einstichtemperatur | °C | 133 | 149 | 151 | 139 | 149 | 155 | 145 |
| - bleibende Verformung | % | 10,7 | 13,1 | 12,2 | 12,8 | 13,9 | 13,8 | 11,0 |
| Ball Rebound 60°C | % | 47,0 | 42,7 | 42,0 | 43,3 | 40,4 | 42,2 | 42,2 |
| MTS E* 60 °C 1 +/- 0,5mm | MPa | 10,8 | 11,3 | 12,0 | 11,1 | 12,5 | 12,4 | 10,9 |
| MTS E" 60 °C 1 +/- 0,5mm | MPa | 3,26 | 3,71 | 4,04 | 3,76 | 4,46 | 4,14 | 3,70 |
| MTS tan $\delta$ 60 °C 1 +/- 0,5mm | - | 0,323 | 0,352 | 0,358 | 0,36 0 | 0,37 9 | 0,35 6 | 0,36 6 |
| MTS E* 60 °C 50 +/- 25 N | MPa | 10,27 | 10,67 | 11,6 | 10,8 | 12,7 | 12,3 | 10,1 |
| MTS E" 60 °C 50 +/- 25 N | MPa | 2,61 | 2,98 | 3,36 | 3,04 | 3,90 | 3,63 | 2,93 |
| MTS tan $\delta$ 60 °C 50 +/- 25 N | - | 0,263 | 0,292 | 0,304 | 0,296 | 0,324 | 0,307 | 0,305 |

Die Ergebnisse der Tabelle 6 zeigen, dass die erfindungsgemäßen Ruße eine engere Aggregatgrößenverteilung ($\Delta$D50/Dmode) und eine höhere Verstärkung (Modul) aufweisen.

Die Ergebnisse der Tabelle 6 zeigen, daß sich durch den Einsatz des nachwachsenden Rußrohstoffes Rapsöl in unterschiedlichen Abmischungen mit nicht nachwachsendem Rußrohstoff ein erfindungsgemäßer Ruß erzeugen lässt,

- der durch eine engere Aggregatgrößenverteilung im Vergleich zur Referenz gekennzeichnet ist und bei Verwendung in der Reifenlauffläche, zu einer Reduzierung des Reifenabriebs und damit zu einer längeren Haltbarkeit des Reifens führt (verlängerte Lebensdauer des Reifens und somit zu einer Reduktion von $CO_2$) und

- der im Vergleich zur Referenz trotz einer deutlich niedrigeren Struktur 24M4-OAN eine ähnlich hohe Verstärkung aufweist (ähnlich hoher 300 % Modul).

Durch den Einsatz des nachwachsenden Rußrohstoffes Rapsöl in unterschiedlichen Abmischungen mit nicht nachwachsendem Rußrohstoff kann die $CO_2$ Bilanz verbessert werden.

## Patentansprüche

1. Furnaceruß, **dadurch gekennzeichnet, dass** der C-14 Gehalt größer 0,05 Bq/g und das Verhältnis ΔD50/Dmode der Aggregatgrößenverteilung kleiner 0,7 ist.

2. Verfahren zur Herstellung des Rußes nach Anspruch 1 durch thermischoxidative Pyrolyse oder thermische Spaltung des Rußrohstoffes, **dadurch gekennzeichnet, dass** der Rußrohstoff einen nachwachsenden Rußrohstoff enthält und bei der Pyrolyse-/Spaltungsreaktion des Rußrohstoffes ein Sauerstoffunterschuß vorhanden ist, wobei man die Reaktion in einem Furnacerußreaktor durchführt, welcher längs der Reaktorachse eine Verbrennungszone, eine Reaktionszone und eine Abbruchzone enthält, indem man ein Strom heißen Abgases in der Verbrennungszone durch vollständiges Verbrennen eines Brennstoffes in einem Sauerstoff enthaltenden Gas erzeugt und das Abgas von der Verbrennungszone durch die Reaktionszone in die Abbruchzone leitet, einen Rußrohstoff in das heiße Abgas in der Reaktionszone einmischt und die Rußbildung in der Abbruchzone durch Einsprühen von Wasser abstoppt.

3. Verfahren nach Anspruch 2, **dadurch gekennzeichnet, dass** man die Reaktion durch Abkühlen auf Temperaturen unterhalb der Pyrolyse- oder Spaltungstemperatur abbricht.

4. Verwendung des Rußes gemäß Anspruch 1 in Kautschuk und Kautschukmischungen, Kunststoff, Druckfarben, Tinten, Inkjet-Tinten, Tonern, Lacken, Farben, Papier, Klebstoffen, Batterien, Pasten, Bitumen, Beton und anderen Baustoffen und als Reduktionsmittel in der Metallurgie.

5. Polymermischungen, **dadurch gekennzeichnet, dass** sie mindestens ein Polymer und mindestens einen Ruß gemäß Anspruch 1 enthalten.

6. Kautschukmischungen, **dadurch gekennzeichnet, dass** sie mindestens einen Kautschuk und mindestens einen Ruß gemäß Anspruch 1 enthalten.

7. Kunststoffmischungen, **dadurch gekennzeichnet, dass** sie mindestens einen Kunststoff und mindestens einen Ruß gemäß Anspruch 1 enthalten.

8. Tinten, **dadurch gekennzeichnet, dass** sie mindestens einen Ruß gemäß Anspruch 1 enthalten.

9. Druckfarben, **dadurch gekennzeichnet, dass** sie mindestens einen Ruß gemäß Anspruch 1 enthalten.

10. Verwendung der Kautschukmischungen gemäß Anspruch 6 zur Herstellung von Luftreifen, Reifenlaufflächen, Kabelmänteln, Schläuchen, Treibriemen, Förderbändern, Walzenbelägen, Reifen, Schuhsolen, Dichtungsringen, Profilen und Dämpfungselementen.

## Claims

1. Furnace black, **characterized in that** the C-14 content is greater than 0.05 Bq/g and the ΔD50/Dmode ratio of the aggregate size distribution is smaller than 0.7.

2. Process for producing the carbon black according to Claim 1 through thermal oxidative pyrolysis or thermal cleavage of the carbon black feedstock, **characterized in that** the carbon black feedstock comprises a renewable carbon black feedstock and the amount of oxygen present during the pyrolysis/cleavage reaction of the carbon black feedstock is substoichiometric, whereby the reaction is carried out in a furnace-black reactor which, along the reactor axis, has a combustion zone, a reaction zone and a termination zone, by producing a stream of hot exhaust gas in the combustion zone through complete combustion of a fuel in a gas comprising oxygen, and passing the exhaust gas from the combustion zone through the reaction zone into the termination zone, mixing a carbon black feedstock into the hot exhaust gas in the reaction zone, and terminating carbon black formation in the termination zone by spraying water into the system.

3. Process according to Claim 2, **characterized in that** the reaction is terminated through cooling to temperatures below the pyrolysis temperature or cleavage temperature.

4. Use of the carbon black according to Claim 1 in rubber and rubber mixtures, in plastic, in printing inks, inkjet inks and other inks, in toners, in lacquers, in paints, in paper, in adhesives, in batteries, in pastes, in bitumen, in concrete and in other construction materials, and as reducing agent in metallurgy.

5. Polymer mixtures, **characterized in that** they comprise at least one polymer and at least one carbon black according to Claim 1.

6. Rubber mixtures, **characterized in that** they comprise at least one rubber and at least one carbon black according to Claim 1.

7. Plastics mixtures, **characterized in that** they comprise at least one plastic and at least one carbon black according to Claim 1.

8. Inks, **characterized in that** they comprise at least one carbon black according to Claim 1.

9. Printing inks, **characterized in that** they comprise at least one carbon black according to Claim 1.

10. Use of the rubber mixtures according to Claim 6 for producing pneumatic and other tyres, tyre treads, cable sheathing, hoses, drive belts, conveyor belts, roll coverings, shoe soles, sealing rings, profiles and damping elements.

## Revendications

1. Noir de carbone de type four, **caractérisé en ce que** sa teneur en $^{14}C$ est supérieure à 0,05 Bq/g et le rapport $\Delta D_{50}/D_{mode}$ de sa distribution de tailles d'agrégats est inférieur à 0,7.

2. Procédé de préparation d'un noir de carbone, conforme à la revendication 1, par pyrolyse thermo-oxydante ou dissociation thermique d'une matière première de noir de carbone, **caractérisé en ce que** la matière première de noir de carbone contient une matière première renouvelable de noir de carbone et **en ce que** l'oxygène est en défaut lors de la réaction de pyrolyse/dissociation de la matière première de noir de carbone, **caractérisé en ce qu'**on réalise la réaction dans un réacteur à noir de carbone de type four qui comporte, au long de l'axe du réacteur, une zone de combus-tion, une zone de réaction et une zone d'interruption, et **en ce qu'**on produit un courant d'effluent de gaz chaud dans la zone de combustion, par combustion complète d'un matériau combustible dans un gaz con-tenant de l'oxygène, et l'on amène cet effluent de gaz depuis la zone de combustion, par la zone de réaction, jusque dans la zone d'interrup-tion, on mêle à l'effluent de gaz chaud une matière première de noir de carbone dans la zone de réaction, et l'on arrête la formation de noir de carbone dans la zone d'interruption, par injection d'eau pulvérisée.

3. Procédé conforme à la revendication 2, **caractérisé en ce que** l'on arrête la réaction par refroidissement à une température inférieure à la température de pyrolyse ou de dissociation.

4. Utilisation d'un noir de carbone, conforme à la revendication 1, dans du caoutchouc et des mélanges à base de caoutchouc, des matières plastiques, des encres d'imprimerie, des encres, des encres pour impression par jet d'encre, des toners, des vernis, des couleurs, du papier, des adhésifs, des batteries, des pâtes, des bitumes, du béton et d'autres matériaux de construction, ou en métallurgie, comme agent réducteur.

5. Mélanges à base de polymère, **caractérisés en ce qu'**ils contiennent au moins un polymère et au moins un noir de carbone conforme à la revendication 1.

6. Mélanges à base de caoutchouc, **caractérisés en ce qu'**ils contiennent au moins un caoutchouc et au moins un noir de carbone conforme à la revendication 1.

7. Mélanges à base de matière plastique, **caractérisés en ce qu'**ils contiennent au moins une matière plastique et au moins un noir de carbone conforme à la revendication 1.

**8.** Encres, **caractérisées en ce qu'**elles contiennent au moins un noir de carbone conforme à la revendication 1.

**9.** Encres d'imprimerie, **caractérisées en ce qu'**elles contiennent au moins un noir de carbone conforme à la revendication 1.

**10.** Utilisation d'un mélange à base de caoutchouc, conforme à la revendication 6, pour la fabrication de pneumatiques pour aéronef, de bandes de roulement de pneumatiques, de gaines de câbles, de tuyaux, de courroies de transmission, de tapis roulants, de revêtements de cylindre, de pneumatiques, de semelles de chaussure, d'anneaux d'étanchéité, de pièces profilées et d'éléments amortisseurs.

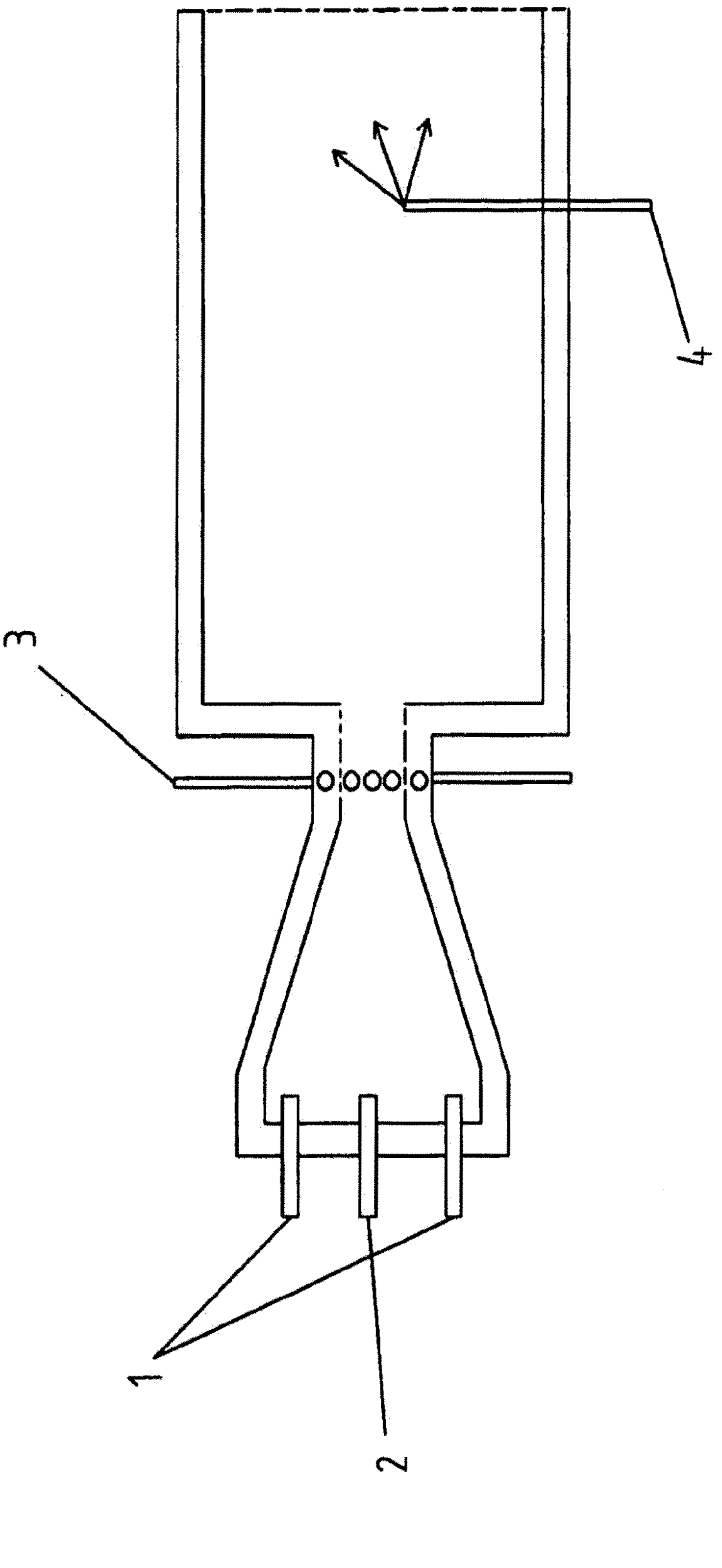


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0792920 A
- EP 0982378 A
- US 5516833 A
- WO 9204415 A
- EP 0799866 A


### In der Beschreibung aufgeführte Nicht-Patentliteratur


- **W. HOFMANN ; HANSER VERLAG.** Rubber Technology Handbook. 1994